# EUROPEAN PATENT SPECIFICATION

(11) **EP 3 082 359 B1**
(45) Date of publication and mention of the grant of the patent: **24.11.2021**
(21) Application number: 14869748.5
(22) Date of filing: 02.06.2014
(51) Int. Cl.: H04W 24/02, H04W 28/18

(54) **WIRELESS PARAMETER CONTROL DEVICE, WIRELESS PARAMETER CONTROL METHOD, WIRELESS BASE STATION AND WIRELESS PARAMETER CONTROL PROGRAM**
DRAHTLOSPARAMETERSTEUERUNGSVORRICHTUNG, DRAHTLOSPARAMETERSTEUERUNGSVERFAHREN, DRAHTLOSE BASISSTATION UND DRAHTLOSPARAMETERSTEUERUNGSPROGRAMM
DISPOSITIF DE COMMANDE DE PARAMÈTRE RADIO, PROCÉDÉ DE COMMANDE DE PARAMÈTRE RADIO, STATION DE BASE RADIO ET PROGRAMME DE COMMANDE DE PARAMÈTRE RADIO

(30) Priority: 10.12.2013 JP 2013255033
(43) Date of publication of application: 19.10.2016
(73) Proprietor: NEC Corporation, Tokyo 108-8001 (JP)
(72) Inventor: KOBAYASHI, Kosei, Tokyo 108-8001 (JP); KUMAGAI, Taichi, Tokyo 108-8001 (JP)
(74) Representative: MacDougall, Alan John Shaw
(86) International application number: PCT/JP2014/064592
(87) International publication number: WO 2015/087565

(56) References cited:
- WO-A1-2013/046502
- JP-A- 2009 290 494
- JP-A- 2013 504 906
- US-A1- 2008 137 537
- US-A1- 2009 034 457
- US-A1- 2013 045 694
- US-A1- 2013 217 407
- US-A1- 2013 281 089

## Description

### Technical Field

The present invention relates to a wireless parameter control device, a wireless parameter control method, a wireless base station and a wireless parameter control program.

### Background Art

In a cellular type wireless communication network represented by a mobile phone network, by spatially dispersing and arranging wireless base stations, a wide service area is formed. The wireless base station forms (manages) about one to six wireless cells in a range wirelessly communicable with itself, and performs wireless communication with wireless terminals (UE: User Equipment) within the wireless cell managed by itself.

In a cellular type wireless communication network, wireless cells that are adjacent to each other are arranged so as to overlap. Therefore, even when a wireless terminal moves across the area covered by the wireless cells, by performing handover (HO) processing of switching the wireless cell to connect, wireless communication can be continued.

The wireless terminal usually measures wireless quality of the wireless cell for each wireless cell located around itself, and establishes a wireless link for connection to the wireless cell with the best wireless quality.

Examples of wireless quality are reception power and a desired wave to interference wave power ratio.

The reception power is the reception intensity of a pilot signal, a reference signal or the like of a wireless cell. Specifically, the reception power corresponds to CPICH RSCP (Common Pilot Channel Received Signal Code Power) in a WCDMA (Wideband Code Division Multiple Access) network, RSRP (Reference Signal Received Power) in an LTE (Long Term Evolution) network, or the like.

Also, the desired wave to interference wave power ratio is the ratio between the reception power of a certain wireless cell and interference power and thermal noise power from the other wireless cells. Specifically, the desired wave to interference wave power ratio corresponds to SIR (Signal to Interference Ratio), SINR (Signal to Interference plus Noise Ratio), CPICH Ec/No (Common Pilot Channel Energy per Chip to Noise Ratio) in a WCDMA network, RSRQ (Reference Signal Received Quality) in an LTE network, or the like.

When the wireless base station is installed or is under operation, the area covered by the wireless cell is optimized for a purpose of reducing an uncommunicable area (Coverage Hole), reducing handover failures, improving wireless communication speed (user throughput) between the wireless base station and the wireless terminal, or the like.

In optimizing the area covered by the wireless cell, generally, a drive test using an exclusive measuring device is carried out, and the reception power and the desired wave to interference wave power ratio of the wireless cell, presence/absence of abnormal disconnection of wireless communication and occurrence of a handover failure, the user throughput of the wireless terminal, or the like are evaluated. Then, a location where problems of insufficient reception power (Weak Coverage), strong interference (Pilot Pollution) or the like tend to occur is specified, and wireless parameters of the wireless cell are adjusted so as to solve the problems.

The wireless parameters of the wireless cell are an antenna tilt angle, an antenna azimuth angle, transmission power, an offset parameter to the wireless quality or the like.

The offset parameter to the wireless quality is a parameter for adding an offset value to the wireless quality of each wireless cell measured by the wireless terminal, in order to adjust the wireless cell (serving cell) to be a connection destination of the wireless terminal.

The offset parameter to the wireless quality is, for example, CIO (Cell Individual Offset), Event A3 offset or the like. The CIO is an offset parameter for adding an individual offset value to the wireless quality of each wireless cell excluding the wireless cell to which the CIO is set. In the meantime, the Event A3 offset is an offset parameter for adding an offset value only to the wireless quality of the wireless cell to which the Event A3 offset is set.

Note that, hereinafter, the CIO of wireless cell B set to wireless cell A, that is, the CIO to be added to the wireless quality of wireless cell B, which is applied to the wireless terminal connected to wireless cell A, is called the CIO from wireless cell A to wireless cell B.

Of the wireless parameters of the wireless cell described above, the antenna tilt angle, the antenna azimuth angle, the transmission power, and the Event A3 offset are wireless parameters uniquely set to the wireless cell to which the wireless parameter is set. Hereinafter, such a wireless parameter is called a cell unit wireless parameter. On the other hand, the CIO is a wireless parameter individually set to the wireless cell that is different from the wireless cell to which the wireless parameter is set. Hereinafter, such a wireless parameter is called a cell pair unit wireless parameter.

In optimizing the area covered by the wireless cell, generally, the user throughput is evaluated from two viewpoints of average characteristic and fairness. For example, the coverage optimization of the wireless cell is executed for the purpose of improving the average characteristic of the user throughput while securing fairness of the user throughput.

The average characteristic of the user throughput is the average characteristic of the user throughput, which is calculated for a plurality of wireless terminals that are present in a predetermined area (for example, a specific region or a specific wireless cell). A representative indicator indicating the average characteristic of user throughput is the average value (average user throughput) of user throughput.

The fairness of user throughput is an indicator indicating bias of user throughput, which is calculated for a plurality of wireless terminals that are present in a predetermined area. A representative indicator indicating the fairness of user throughput is user throughput (lower X% user throughput) corresponding to a lower X% point (for example, a 5% point or a 10% point) of the cumulative distribution function (CDF) of the user throughput.

For example, when 100 wireless terminals and 100 user throughput samples are obtained, the lower 5% user throughput is the fifth smallest user throughput of 100 user throughput samples. When the average user throughput is the same, the fairness is high when the lower 5% user throughput is high, and the fairness is low when the lower 5% user throughput is low.

Note that, the average characteristic and the fairness of the user throughput are called a throughput characteristic altogether, hereinafter.

The coverage optimization of the wireless cell based on the result of the drive test as described above is accompanied by manual measurement, adjustment of the wireless parameters or the like, so that it is one cause of increased operation costs of a wireless communication network. Therefore, a technology of automatically optimizing the coverage of the wireless cell has been examined.

For example, in recent years, in 3GPP (3rd Generation Partnership Project), standardization of an autonomous network management method called SON (Self-organizing Networks) has been carried out. While various functions are provided by SON, as technologies related to the coverage optimization of the wireless cell, there are CCO (Coverage and Capacity Optimization) and MLB (Mobility Load Balancing).

Patent Literature 1 (International Publication No. WO2000/072618) and Patent Literature 2 (International Publication No. WO2011/136083) disclose an example of such coverage optimization technologies.

In the technology disclosed in Patent Literature 1, when the traffic load of a certain wireless cell (wireless cell A) is high, the wireless communication system selects a wireless cell (wireless cell B) with the largest number of wireless terminals connected to wireless cell A near a boundary with wireless cell A among adjacent cells that are adjacent to wireless cell A and that has low traffic load, reduces the coverage area of wireless cell A, and enlarges the coverage area of wireless cell B. Thus, bias of the traffic loads of wireless cell A and wireless cell B is corrected.

Generally, when the wireless cell (wireless cell A) of the high traffic load and the wireless cell (wireless cell B) of the low traffic load are compared, since there are more allocation opportunities and a larger allocation amount of wireless resources, the user throughput is higher for the wireless terminal connected to wireless cell B than for the wireless terminal connected to wireless cell A. Therefore, the bias of the traffic loads between the wireless cells can be used as an indicator to measure the fairness of the user throughput between the wireless cells.

Therefore, in the technology disclosed in Patent Literature 1, by reducing the difference in the traffic load between wireless cell A and wireless cell B, the fairness of the user throughput can be improved.

Also, in the technology disclosed in Patent Literature 2, a first wireless base station transmits a throughput representative value (for example, the average user throughput) of the wireless terminal connected to the present station to a second wireless base station, and the second wireless base station compares the received throughput representative value with a throughput representative value of the wireless terminal connected to the present station, and controls the coverage of the wireless cell managed by the present station so as to reduce the difference in the throughput representative value between the wireless base stations. Thus, the fairness of the user throughput between the wireless base stations can be improved. Since a measured value of the user throughput is directly used, the technology disclosed in Patent Literature 2 can improve the fairness of the user throughput with higher accuracy than the technology disclosed in Patent Literature 1.

### Citation List

### Patent Literature

Patent Literature 1: International Publication No. WO2000/072618
Patent Literature 2: International Publication No. WO2011/136083
Patent Literature 3: United States Publication No. US 2008/137537 A1
Patent Literature 4: United States Publication No. US 2009/034457 A1

US 2008/137537 A1 discloses a centralized packet scheduler for a wireless communications network where centralized packet scheduling is applicable. The centralized packet scheduler uses a utility-opportunity cost packet scheduling scheme for high-speed access that simultaneously achieves efficiency, fairness, user satisfaction, and flexibility. The scheme employs a flexible utility function that incorporates the channel quality conditions of the users as well as a fairness measure. The utility function maximizes user satisfaction as perceived by the service provider while ensuring that users with favourable instantaneous channel quality conditions do not monopolize the radio resources. In addition, the scheme uses an opportunity cost function to allow the service provider to optimize fairness in the context of network throughput and hence, to control the system capacity. The scheme combines the requirements of users (e.g., throughput, delay, fairness, etc.) with the requirements of the service provider (e.g., revenue) in making scheduling decisions.

US 2009/034457 A1 discloses techniques for enhancing throughput capacity and/or bandwidth distribution fairness among access points (Aps) in a wireless network are described. Specifically, a channel frequency profile which includes a center frequency and channel-width (channel bandwidth) is dynamically assigned to each of one or more APs in a wireless network. The assigned channel frequency profile for each AP is based, at least in part, on the current composition of the wireless network including, its topology and traffic load distribution. In this regard, each AP's channel frequency profile can be continuously or periodically changed such that the entire available frequency spectrum is effectively utilized and/or interference between APs is avoided or limited.

US 2013/281089 A1 discloses a method of configuring small cell base stations in a cellular network. A constraint on a performance-related metric associated with at least a portion of the cellular network is received. In some embodiments, the constraint on the performance-related metric comprises a constraint on a performance-related metric associated with one or more macrocells. Measurement data from one or more small cell base stations is received via a control interface. One or more optimized values of one or more parameters associated with one or more small cell base stations are searched. The searching is based at least in part on the received measurement data and subject to the constraint on the performance-related metric associated with the at least a portion of the cellular network. The one or more optimized values of the one or more parameters to the associated small cell base stations are transmitted.

US 2013/217407 A1 discloses a method for a deciding on whether to perform a potential load balancing operation in a wireless network having a first cell with second cells embedded therein. In order to improve the overall performance of the network a method for deciding on a potential load balancing operation in a wireless network comprising a first base station having a first cell and at least one second base station having a second cell, the first cell and the second cell at least partially over lapping each other, is suggested. This method comprises evaluating an impact of the potential load balancing operation to an overall performance metric (M), said metric (M) characterizing the performance of the first cell and the at least one second cell, and initiating the load balancing operation if said evaluating indicates that the potential load balancing operation would improve the performance according to the performance metric (M).

### Technical Problem

As described above, in the technologies disclosed in Patent Literatures 1 and 2, by controlling the area covered the wireless cell, the fairness of the user throughput is improved. However, even when the fairness of the user throughput is improved, the average characteristic of the user throughput is not always improved and is, to the contrary, sometimes degraded.

For example, a situation is considered in which, as a result of trying to reduce a difference in traffic loads between wireless cells by controlling the area covered by the wireless cell, the traffic load of the wireless cell having a high traffic load does not change and the traffic load of the wireless cell having a low traffic load increases. Such a situation occurs when the wireless quality is degraded in the wireless cell having the low traffic load as a result of controlling the area covered by the wireless cell or the like. In such a situation, the user throughput of the wireless cell having the high traffic load, that is, the wireless cell with the low user throughput as a whole, is not improved, and the user throughput of the wireless cell having the low traffic load, that is, the wireless cell of the high user throughput as a whole, is degraded. Therefore, for the wireless terminals connected to these wireless cells, the average characteristic of the user throughput is degraded.

In this way, in the technologies disclosed in Patent Literatures 1 and 2, since only the fairness of the user throughput is taken into consideration, the problem occurs in which there is a risk that the average characteristic of the user throughput is degraded.

The present invention provides a wireless parameter control device, a wireless parameter control method, a wireless base station, and a wireless parameter control program as disclosed in the appended independent claims.

### Summary of Invention

In order to achieve the purpose described above, the wireless parameter control device of the present invention includes: a traffic load acquirer that acquires, from a first wireless base station that manages a first wireless cell, a traffic load of the first wireless cell, and acquires, from a second wireless base station that manages a second wireless cell, a traffic load of the second wireless cell located around the first wireless cell; an average characteristic indicator calculator that calculates a sum or a product of the traffic load of the first wireless cell and the traffic load of the second wireless cell, as a first indicator that indicates an average characteristic of user throughputs for wireless terminals in the first wireless cell and the second wireless cell; a fairness indicator calculator that calculates a bias between the traffic load of the first wireless cell and the traffic load of the second wireless cell, by using at least one from among an absolute value of difference, a ratio, a standard deviation, and variance between the traffic load of the first wireless cell and the traffic load of the second wireless cell, as a second indicator that indicates fairness of user throughputs for wireless terminals in the first wireless cell and the second wireless cell; and a wireless parameter controller for determining a value of at least one of a cell unit wireless parameter and a cell pair unit wireless parameter, using a value of a third indicator calculated using an objective function that evaluates a throughput characteristic of wireless terminals in the first wireless cell and the second wireless cell, on the basis of the first indicator and the second indicator, and for controlling said one from among the cell unit wireless parameter and the cell pair unit wireless parameter of the first wireless cell using said determined value, wherein the cell pair unit wireless parameter is a parameter that directly affects the cell pair of the first and second wireless cell and does not directly affect the others.

In order to achieve the purpose described above, the wireless parameter control method of the present invention includes: acquiring, from a first wireless base station that manages a first wireless cell, a traffic load of the first wireless cell, and acquiring, from a second wireless base station that manages a second wireless cell, a traffic load of the second wireless cell located around the first wireless cell; calculating a sum or a product of the traffic load of the first wireless cell and the traffic load of the second wireless cell, as a first indicator that indicates an average characteristic of user throughputs of wireless terminals in the first wireless cell and the second wireless cell; calculating a bias between the traffic load of the first wireless cell and the traffic load of the second wireless cell, by using at least one from among an absolute value of difference, a ratio, a standard deviation, and variance between the traffic load of the first wireless cell and the traffic load of the second wireless cell, as a second indicator that indicates fairness of the user throughputs for wireless terminals in the first wireless cell and the second wireless cell; determining a value of at least one of a cell unit wireless parameter and a cell pair unit wireless parameter, using a value of a third indicator calculated using an objective function that evaluates a throughput characteristic of wireless terminals in the first wireless cell and the second wireless cell, on the basis of the first indicator and the second indicator; and controlling said one from among the cell unit wireless parameter and the cell pair unit wireless parameter of the first wireless cell using said determined value, wherein the cell pair unit wireless parameter is a parameter that directly affects the cell pair of the first and second wireless cell and does not directly affect the others.

Also disclosed is a wireless base station that includes: a traffic load acquirer that acquires first load information indicating a traffic load of the first wireless cell managed by itself, and second load information indicating a traffic load of a second wireless cell located around the first wireless cell; a first calculator that calculates a first indicator indicating the average characteristic of user throughputs of wireless terminals in the first wireless cell and the second wireless cell, using the first load information and the second load information; a second calculator that calculates a second indicator indicating fairness of user throughputs of wireless terminals in the first wireless cell and the second wireless cell, using the first load information and the second load information; and a wireless parameter controller that controls the wireless parameter of the first wireless cell according to the first indicator and the second indicator.

In order to achieve the purpose described above, a computer program product of the present invention comprises instructions, that when executed by a wireless parameter control device, cause a wireless parameter control device to perform the above described wireless parameter control method.

### Advantageous Effects of Invention

According to the present invention, the throughput characteristics of a wireless terminal can be improved.

### Brief Description of Drawings

[Figure 1] Figure 1 is a schematic configuration diagram illustrating a configuration of a wireless communication network in a first exemplary embodiment.
[Figure 2] Figure 2 is a block diagram illustrating a configuration of a wireless parameter control device illustrated in Figure 1.
[Figure 3] Figure 3 is a flowchart illustrating an operation of the wireless parameter control device illustrated in Figure 1.
[Figure 4] Figure 4 is a flowchart illustrating another operation of the wireless parameter control device illustrated in Figure 1.
[Figure 5] Figure 5 is a block diagram illustrating a configuration of a wireless parameter control device in a second exemplary embodiment.
[Figure 6] Figure 6 is a flowchart illustrating an operation of the wireless parameter control device illustrated in Figure 5.
[Figure 7] Figure 7 is a schematic configuration diagram illustrating a configuration of a wireless communication network in a third exemplary embodiment.
[Figure 8] Figure 8 is a block diagram illustrating a configuration of a wireless base station illustrated in Figure 7.

### Description of Embodiments

Hereinafter, exemplary embodiments will be described with reference to the drawings.

### (First exemplary embodiment)

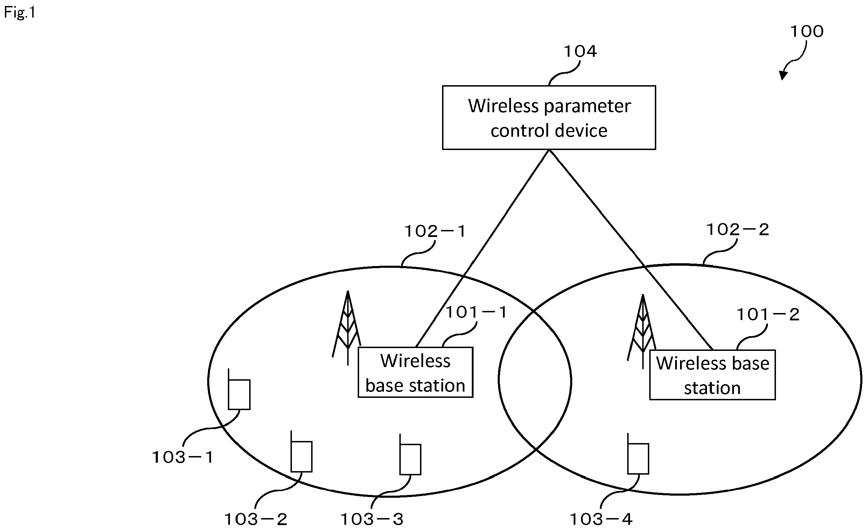

Figure 1 is a schematic configuration diagram of wireless communication network (wireless communication system) 100 relating to the first exemplary embodiment.

Wireless communication network 100 illustrated in Figure 1 includes wireless base stations 101-1 and 101-2, UEs 103-1 to 103-4, and wireless parameter control device 104.

UEs 103-1 to 103-3 are wireless terminals connected to wireless cell 102-1 managed by wireless base station 101-1. Also, UE 103-4 is a wireless terminal connected to wireless cell 102-2 managed by wireless base station 101-2. Note that the numbers of individual components of wireless communication network 100 described above are examples and are not limited to these numbers.

Wireless base station 101-1 performs bidirectional wireless communication with UEs 103-1 to 103-3. Also, wireless base station 101-2 performs bidirectional wireless communication with UE 103-4.

Wireless base stations 101-1 and 101-2 are connected to a host network (not shown in the figure), and relay traffic between UEs 103-1 to 103-4 and the host network. Note that the host network corresponds to a wireless access network, a core network or the like.

Note that wireless base stations 101-1 and 101-2 are macro wireless base stations that cover a wide area, micro wireless base stations and pico wireless base stations that cover a relatively small area, and femto wireless base stations that are small-sized wireless base stations for indoors, or the like. Also, wireless base stations 101-1 and 101-2 may be relay base stations that relay wireless signals of wireless cell 102-1 or 102-2.

Wireless parameter control device 104 acquires load information indicating the traffic load of wireless cell 102-1 (load information of wireless cell 102-1) which is first load information from wireless base station 101-1. Wireless parameter control device 104 acquires load information of wireless cell 102-2 which is second load information from wireless base station 101-2. Also, wireless parameter control device 104 controls a wireless parameter of wireless cells 102-1 and 102-2.

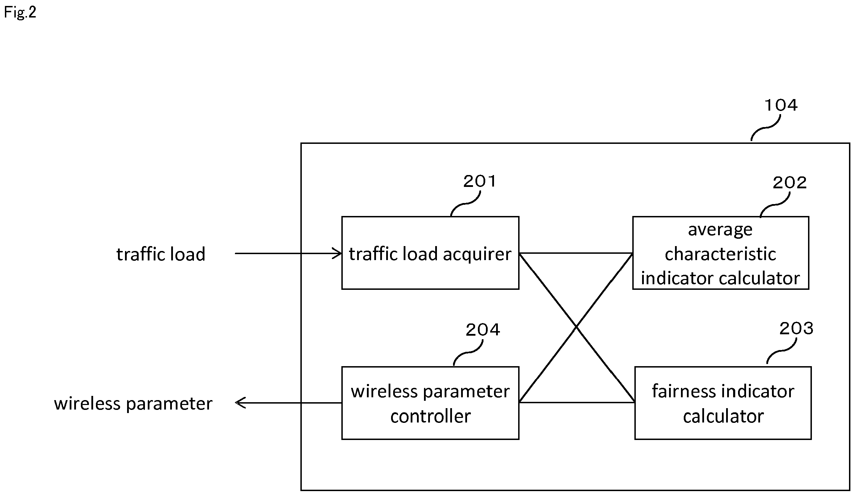

Figure 2 is a block diagram illustrating a configuration of wireless parameter control device 104.

Wireless parameter control device 104 includes traffic load acquirer 201, average characteristic indicator calculator 202 which is a first calculator, fairness indicator calculator 203 which is a second calculator, and wireless parameter controller 204.

Traffic load acquirer 201 acquires the load information of wireless cell 102-1 from wireless base station 101-1, and acquires the load information of wireless cell 102-2 from wireless base station 101-2.

The traffic load is indicated using, for example, a wireless resource use rate in each wireless cell (for example, a physical resource block (PRB) use rate, a ratio of actual used transmission power to usable maximum transmission power, or the like). Also, the traffic load may be indicated using the number of UEs such as the number of simultaneously communicating UEs or the number of active UEs in each wireless cell.

The load information of each wireless cell acquired by traffic load acquirer 201 may indicate the instantaneous value of the traffic load of each wireless cell, but it is preferable to indicate the value for which the traffic load of each wireless cell is averaged in a predetermined period. Traffic load acquirer 201 acquires the load information indicating the traffic load averaged in the predetermined period (1 minute, 10 minutes, 1 hour, 24 hours, 1 week, or the like), for example.

Average characteristic indicator calculator 202 calculates an average characteristic indicator (first indicator) indicating the average characteristic of user throughputs of UEs 103-1 to 103-4 that are present in wireless cell 102-1 and wireless cell 102-2, using the load information of wireless cell 102-1 and wireless cell 102-2.

Here, in the case in which traffic amounts per unit time generated in UEs 103-1 to 103-4 are the same, between a situation in which the user throughput of UEs 103-1 to 103-4 is high as a whole (the average characteristic of the user throughput is good) and a situation in which the user throughput of UEs 103-1 to 103-4 is low as a whole (the average characteristic of user throughput is bad), the total amount of the traffic loads of wireless cell 102-1 and wireless cell 102-2 is smaller in the former situation. The reason is that, when user throughput is high, consumption time of wireless resources per wireless terminal can be short, and the traffic load of the wireless cell becomes small as a result. Therefore, as an indicator indicating the average characteristic of user throughput, an indicator indicating the total amount of the traffic load of each wireless cell can be used. Specifically, a sum, a product or the like of the traffic loads of the respective wireless cells can be used as an average characteristic indicator. When using the sum or the product of the traffic loads of the respective wireless cells as the average characteristic indicator, it can be determined that, when the sum or the product of the traffic loads is smaller, the average characteristic of the user throughput is better.

Note that an example in which average characteristic indicator calculator 202 calculates the average characteristic indicator using either sum or product of the traffic loads is described, however, it is not limited thereto. Average characteristic indicator calculator 202 may calculate the average characteristic indicator using both the sum and the product of the traffic loads. That is, average characteristic indicator calculator 202 can obtain the average characteristic indicator by calculating the total amount of the traffic load of a control cell and the traffic load of a peripheral cell using at least one of the sum and the product of the traffic loads.

Fairness indicator calculator 203 calculates a fairness indicator (second indicator) indicating fairness of user throughput of UEs 103-1 to 103-4 that are present in wireless cell 102-1 and wireless cell 102-2, using the load information of wireless cell 102-1 and wireless cell 102-2.

Here, as the fairness indicator indicating the fairness of the user throughput, an indicator indicating bias of the traffic loads of the respective wireless cells can be used. Specifically, fairness indicator calculator 203 calculates a difference, a ratio, a standard deviation, variance or the like of the traffic loads of the respective wireless cells as the fairness indicator.

Note that, an example in which fairness indicator calculator 203 calculates the fairness indicator using one, from among the difference, ratio, standard deviation and variance of the traffic loads is described, however, it is not limited thereto. Fairness indicator calculator 203 may calculate the average characteristic indicator using two or more indicators from among the difference, ratio, standard deviation and variance of the traffic loads. That is, fairness indicator calculator 203 can obtain the fairness indicator by calculating the bias of the traffic load of the control cell and the traffic load of the peripheral cell using at least one from among the difference, ratio, standard deviation and variance of the traffic loads.

Wireless parameter controller 204 controls the wireless parameter of wireless cell 102-1 and/or wireless cell 102-2 according to the average characteristic indicator calculated by average characteristic indicator calculator 202 and the fairness indicator calculated by fairness indicator calculator 203. The wireless parameters to be controlled are an antenna tilt angle, an antenna azimuth angle, transmission power, an offset parameter to wireless quality or the like of the wireless cell.

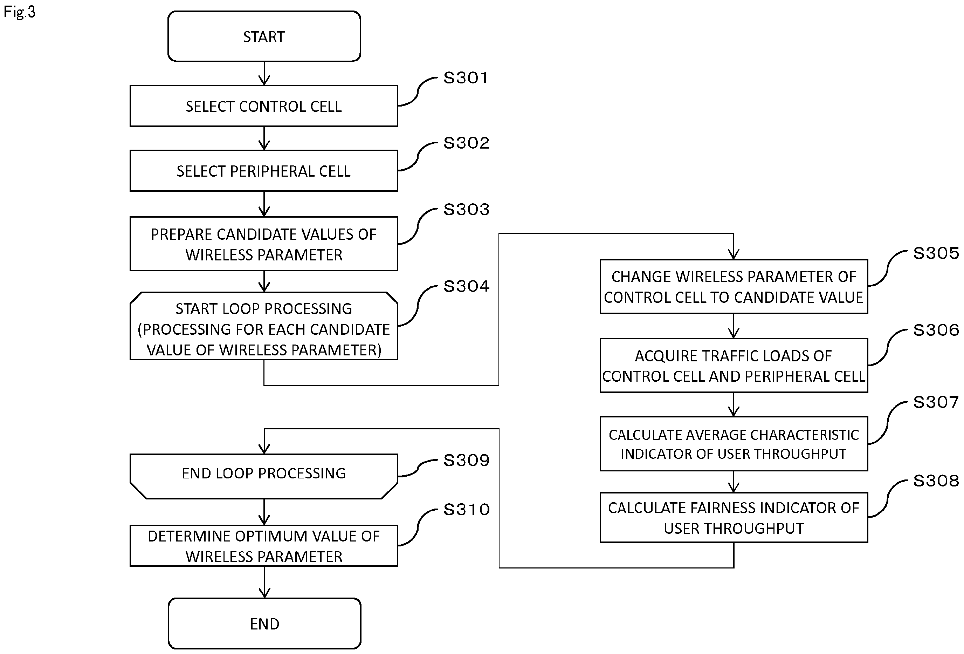

Next, an operation of wireless parameter control device 104 will be described in detail using Figure 3.

Figure 3 is a flowchart illustrating the operation of wireless parameter control device 104.

First, wireless parameter controller 204 selects the wireless cell to control the wireless parameter as a control cell (first wireless cell) (step S301).

For example, in a case in which a wireless base station is newly installed and a wireless cell is added to wireless communication network 100, wireless parameter controller 204 can select the added wireless cell as the control cell. By selecting the control cell in this way, when a wireless cell is newly added, the coverage area of the wireless cell can be automatically optimized. Also, a wireless cell whose traffic load per day or whose traffic load in a predetermined time zone (for example, a peak hour of traffic) is equal to or smaller than a predetermined threshold (for example, 20%) or a wireless cell whose traffic load per day or whose traffic load in a predetermined time zone is equal to or larger than a predetermined threshold (for example, 80%) can be selected as the control cell. By selecting the control cell in this way, the wireless cell where the fairness of user throughput is low and the wireless cell where the average characteristic is low can be selected as the control cell.

Note that, below, it is assumed that wireless parameter controller 204 selects wireless cell 102-1 as the control cell.

Next, wireless parameter controller 204 selects a wireless cell located around the control cell as a peripheral cell (second wireless cell) (step S302). Note that wireless parameter controller 204 may select one wireless cell, or may select two or more wireless cells as the peripheral cell.

It is preferable that wireless parameter controller 204 select the wireless cell in which there is a high possibility that it will be affected by a change in the wireless parameter of the control cell as the peripheral cell. Wireless parameter controller 204 selects, for example, the wireless cell located within a predetermined distance (for example, 500 m) from the control cell, the wireless cell whose number of times of handover from the control cell is larger than a predetermined number of times, the wireless cell whose number of times of handover to the control cell is larger than a predetermined number of times, or the like as the peripheral cell. In addition, wireless parameter controller 204 may select the wireless cell where a reference signal or a pilot signal is detected by the wireless terminal for which the control cell is a serving cell as the peripheral cell.

Note that, below, it is assumed that wireless parameter controller 204 selects one wireless cell (wireless cell 102-2) as the peripheral cell.

Next, wireless parameter controller 204 prepares a plurality of candidate values of the wireless parameter to be controlled (step S303). The wireless parameter that is to be controlled by wireless parameter controller 204 may be either a cell unit wireless parameter or a cell pair unit wireless parameter.

For example, in the case of controlling the antenna tilt angle which is the cell unit wireless parameter, wireless parameter controller 204 prepares (11°, 13°, 15°, 17°, 19°) or the like as candidate values. Also, in the case of controlling the transmission power which is the cell unit wireless parameter, wireless parameter controller 204 prepares (46 dBm, 43 dBm, 40 dBm) or the like as candidate values. In addition, in the case of controlling CIO from wireless cell 102-1 to wireless cell 102-2 which is the cell pair unit wireless parameter, wireless parameter controller 204 prepares (-6 dB, -3 dB, 0 dB, 3 dB, 6 dB) or the like as candidate values.

Next, for each candidate value of the wireless parameter, loop processing indicated in steps S305 to S308 is started (step S304).

First, wireless parameter controller 204 selects one of the prepared candidate values of the wireless parameter, and changes the wireless parameter of the control cell to the candidate value (step S305).

Next, traffic load acquirer 201 acquires the load information (for example, an average PRB use rate per day) indicating the traffic load for the control cell and the peripheral cell (step S306). Note that it is preferable that traffic load acquirer 201 acquire the load information after the wireless parameter is changed to the candidate value in step S305.

Below, the traffic load of the control cell is indicated as Uc, and the traffic load of the peripheral cell is indicated as Un.

Next, average characteristic indicator calculator 202 calculates the average characteristic indicator of user throughput of UEs 103-1 to 103-4 using the traffic load Uc of the control cell and the traffic load Un of the peripheral cell (step S307).

As described above, as the indicator indicating the average characteristic of the user throughput, the indicator indicating the total amount of the traffic loads of the control cell and the peripheral cell can be used. Therefore, average characteristic indicator calculator 202 calculates a sum (Uc + Un), a product (Uc*Un) or the like of the traffic loads of the respective wireless cells as the average characteristic indicator. Regardless of whether the average characteristic indicator is the sum or the product of the traffic loads, it can be determined that the average characteristic of the user throughput is better when the value is smaller.

Next, fairness indicator calculator 203 calculates the fairness indicator of user throughput of UEs 103-1 to 103-4 using the traffic load Uc of the control cell and the traffic load Un of the peripheral cell (step S308).

As described above, as the indicator indicating the fairness of the user throughput, the indicator indicating the bias of the traffic loads between the control cell and the peripheral cell can be used. Therefore, fairness indicator calculator 203 calculates, for example, the difference (Uc - Un, Un - Uc, or |Uc - Un| (an absolute value of Uc - Un)), the ratio (Uc/Un or Un/Uc) or the like of the traffic loads of the respective wireless cells as the fairness indicator. It can be determined that the fairness of user throughput is higher when the fairness indicator is closer to 0 in the case in which the fairness indicator is the difference of the traffic loads, and the fairness of user throughput is higher when the fairness indicator is closer to 1 in the case in which the fairness indicator is the ratio of the traffic loads.

Note that the order of step S307 and step S308 may be reversed.

Next, when there is a candidate value of the wireless parameter for which the average characteristic indicator and the fairness indicator are not calculated, wireless parameter control device 104 selects one unselected candidate value from among the prepared candidate values of the wireless parameter, and advances to processing in step S305. On the other hand, when the average characteristic indicator and the fairness indicator are calculated for all the candidate values of the wireless parameter, wireless parameter control device 104 advances to processing in step S310 (step S309).

Subsequently, wireless parameter controller 204 determines the optimum value of the wireless parameter of the control cell (wireless cell 102-1) using the average characteristic indicator and the fairness indicator calculated for each candidate value of the wireless parameter, and changes the wireless parameter of the control cell to the determined optimum value (step S310).

For a method of determining the optimum value of the wireless parameter, three methods will be described below. Note that the method of determining the optimum value of the wireless parameter is not limited to the three methods described below.

In addition, below, it is assumed that the average characteristic indicator of the user throughput is indicated as Y0 and the fairness indicator is indicated as Z0 in the case in which the wireless parameter of the control cell is a default value or a predetermined reference value, and the average characteristic indicator of the user throughput is indicated as Yi and the fairness indicator is indicated as Zi in the case in which the wireless parameter is an i-th (i = 1, 2, ..., I) candidate value (candidate value i). Also, it is assumed that the average characteristic indicator of the user throughput is the sum of the traffic loads, and the fairness indicator is the absolute value of the difference of the traffic loads.

First, a first method will be described.

Wireless parameter controller 204 determines the candidate value of the wireless parameter that optimizes the average characteristic indicator of the user throughput in a range such that the fairness indicator of the user throughput satisfies a predetermined condition as the optimum value. Wireless parameter controller 204 determines the candidate value of the wireless parameter that optimizes the average characteristic indicator of user throughput in a range such that the fairness indicator of the user throughput is not degraded as the optimum value, for example. Specifically, for example, wireless parameter controller 204 selects the candidate value i that minimizes Yi as the optimum value from the candidate values i that satisfy Zi <= Z0.

Next, a second method will be described.

Wireless parameter controller 204 determines the candidate value of the wireless parameter that optimizes the fairness indicator of the user throughput in a range such that the average characteristic indicator of user throughput satisfies a predetermined condition as the optimum value. Wireless parameter controller 204 determines the candidate value of the wireless parameter that optimizes the fairness indicator of the user throughput in a range such that the average characteristic indicator of user throughput is not degraded as the optimum value, for example. Specifically, for example, wireless parameter controller 204 selects the candidate value i that minimizes Zi as the optimum value from the candidate values i that satisfy Yi <= Y0.

Next, a third method will be described.

Wireless parameter controller 204 defines an objective function (f(Yi,Zi)) which has the average characteristic indicator (Yi) and the fairness indicator (Zi) of the user throughput as variables and evaluates throughput characteristic of the wireless terminals in the control cell and the peripheral cell, and determines the candidate value i that optimizes a function value of the objective function as the optimum value. Specifically, for example, wireless parameter controller 204 defines f(Yi,Zi) = Yi+Zi, and selects the candidate value i that optimizes f(Yi,Zi) as the optimum value.

Next, an operation in the case in which wireless parameter controller 204 selects two or more wireless cells as the peripheral cells in step S302 will be described.

First, in step S306, traffic load acquirer 201 acquires the load information of the control cell and each of the plurality of peripheral cells.

Next, in step S307, average characteristic indicator calculator 202 calculates a statistic of the traffic loads of the peripheral cells using the load information of each of the plurality of peripheral cells acquired in step S306. Specifically, average characteristic indicator calculator 202 calculates an average value, a median, a mode, or the like of the traffic loads of the individual peripheral cells as the statistic. Note that, below, the statistic of the traffic loads of the peripheral cells calculated by average characteristic indicator calculator 202 is indicated as Us.

For example, in the case in which three peripheral cells are selected in step S302, the traffic loads of the individual peripheral cells indicated by each piece of the load information acquired in step S306 are 40%, 60% and 65%, and average characteristic indicator calculator 202 calculates the average value of the traffic loads of the peripheral cells as the statistic Us of the traffic loads of the peripheral cells, average characteristic indicator calculator 202 calculates Us = (40 + 60 + 65)/3 = 55% as the statistic Us of the traffic loads of the peripheral cells.

Average characteristic indicator calculator 202 calculates the average characteristic indicator of user throughput using the traffic load Uc of the control cell and the statistic Us of the traffic loads of the peripheral cells.

Next, in step S308, fairness indicator calculator 203 calculates the statistic Us of the traffic loads of the peripheral cells similarly to the processing of average characteristic indicator calculator 202 described above, using the traffic loads of the individual peripheral cells indicated by each piece of the load information acquired in step S306. Further, fairness indicator calculator 203 calculates the fairness indicator of user throughput using the traffic load Uc of the control cell and the statistic Us of the traffic loads of the peripheral cells.

In this way, by calculating the average characteristic indicator and the fairness indicator of user throughput using the statistic Us of the traffic loads of the peripheral cells and the traffic load Uc of the control cell, wireless parameter control device 104 can perform processing similar to that in the case in which one peripheral cell is selected.

Note that a method like this is suitable in the case of controlling the cell unit wireless parameter, the antenna tilt angle or the transmission power, for example, as the wireless parameter of the control cell. That is, a change of the cell unit wireless parameter affects not only one specific peripheral cell but also the plurality of peripheral cells uniformly. By calculating the average characteristic indicator and the fairness indicator of user throughput using the statistic Us of the traffic loads of the peripheral cells, the traffic load of each of the plurality of peripheral cells that can be affected by the change of the wireless parameter can be simultaneously considered, and the optimum value of the wireless parameter can be efficiently determined.

Note that, in the description above, the statistic Us of the traffic loads of the peripheral cells is calculated by average characteristic indicator calculator 202 and fairness indicator calculator 203, however, it is not limited thereto. The statistic Us of the traffic loads of the peripheral cells may be calculated by traffic load acquirer 201 or the like.

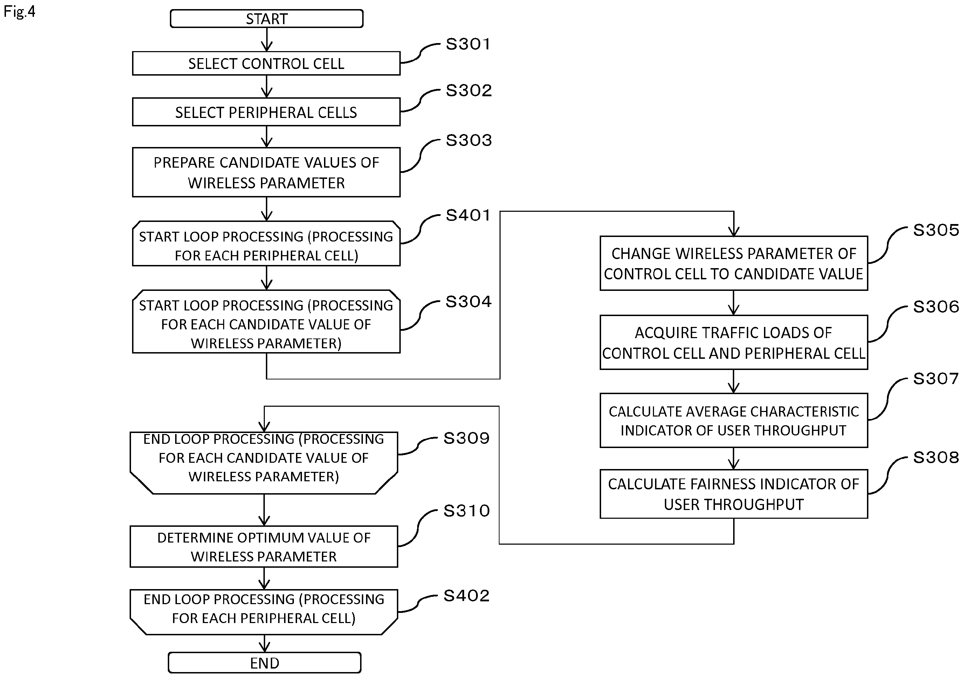

The operation in the case in which wireless parameter controller 204 selects two or more wireless cells as the peripheral cells is not limited to the operation described above. The other operation in the case in which wireless parameter controller 204 selects two or more wireless cells as the peripheral cells will be described using a flowchart illustrated in Figure 4.

The flowchart illustrated in Figure 4 is different, compared with the flowchart illustrated in Figure 3, as regards the point that the processing in steps S401 and S402 is added.

First, for all of the selected peripheral cells, loop processing indicated in steps S304 to S310 is started (step S401).

In step S402, when there is a peripheral cell for which the optimum value of the wireless parameter is not determined, wireless parameter control device 104 selects one of those peripheral cells, and advances to the processing in step S304. On the other hand, when the optimum value of the wireless parameter is determined for all the peripheral cells, wireless parameter control device 104 ends the processing (step S402).

Note that, in step S302, wireless parameter controller 204 may impart priority degrees to the selected individual peripheral cells on the basis of the relation between the control cell and each of the selected peripheral cells. In such a case, the peripheral cells are selected one by one in descending order of the priority degree, and loop processing indicated in steps S304 to S310 is performed for each selected peripheral cell. Wireless parameter controller 204 imparts higher priority to the peripheral cell whose distance from the control cell is shorter. Also, wireless parameter controller 204 may impart higher priority to the peripheral cell that is handed over to the control cell a larger number of times or to the peripheral cell that the control cell hands over a larger number of times.

Here, the cell pair unit wireless parameter such as the CIO directly affects a specific cell pair and does not directly affect the others. Therefore, wireless parameter controller 204 may perform processing in steps S304 to S310 of the cell pair unit wireless parameter that directly can affect the peripheral cell selected in step S401. For example, when wireless cell A is selected as the peripheral cell, the optimum value is determined by processing in steps S304 to S310 with only the CIO from the control cell to wireless cell A as a target.

In this way, when wireless parameter controller 204 determines the optimum value of the cell pair unit wireless parameter, the optimum value of the cell pair unit wireless parameter that affects the peripheral cell is determined according to the average characteristic indicator and the fairness indicator of user throughput calculated using the control cell and one peripheral cell selected in step S401. Since wireless parameter controller 204 does not control the cell pair unit wireless parameter which does not affect the selected peripheral cell, the cell pair unit wireless parameter can be optimized without adversely affecting the other peripheral cells.

Note that, in the description above, traffic load acquirer 201 calculates the traffic loads Uc and Un of the control cell and each peripheral cell for each prepared candidate value of the wireless parameter, however, it is not limited thereto. As a modification, traffic load acquirer 201 may acquire, as the traffic loads of the control cell and of each peripheral cell, functions Uc(x) and Un(x) with a candidate value x of the wireless parameter as a variable. In such a modification, the average characteristic indicator and the fairness indicator of user throughput are calculated using the functions Uc(x) and Un(x), and the optimum value of the wireless parameter is determined using those indicators.

In this way, wireless parameter control device 104 of this exemplary embodiment includes traffic load acquirer 201 that acquires the load information of the individual wireless cells, average characteristic indicator calculator 202 that calculates the average characteristic indicator of the user throughput using the load information of the individual wireless cells, fairness indicator calculator 203 that calculates the fairness indicator of the user throughput using the load information of the individual wireless cells, and wireless parameter controller 204 that controls the wireless parameter. Therefore, wireless parameter control device 104 can control the wireless parameter of wireless cell 102-1 taking into account both of the average characteristic of the user throughput and the fairness of user throughput, and improve the throughput characteristic of UEs 103-1 to 103-4.

### (Second exemplary embodiment)

Next, the second exemplary embodiment will be described with reference to the drawings.

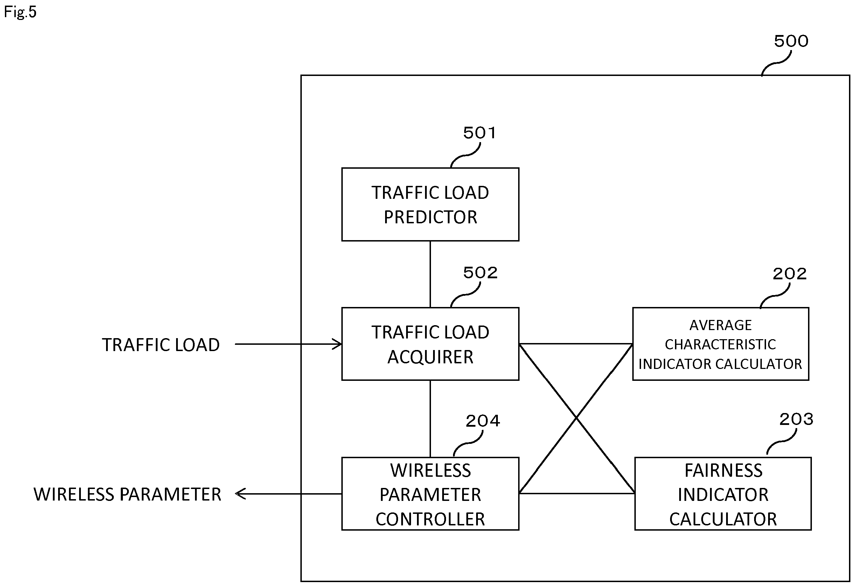

Figure 5 is a diagram illustrating a configuration of a wireless parameter control device of a wireless communication network in the second exemplary embodiment.

Wireless parameter control device 500 is different, compared with wireless parameter control device 104, as regards the point that traffic load predictor 501 is added and the point that traffic load acquirer 201 is changed to traffic load acquirer 502. Note that, in Figure 5, the same sign is attached to the configuration that is similar to that in Figure 2 and description is omitted.

Traffic load predictor 501 predicts the traffic load of each wireless cell in the case in which the wireless parameter of the wireless cell is changed.

Traffic load acquirer 502 acquires the traffic load of each wireless cell in the case in which the wireless parameter of the wireless cell is changed, not as a measured value, but as a predicted value from traffic load predictor 501.

Next, an operation of wireless parameter control device 500 will be described in detail.

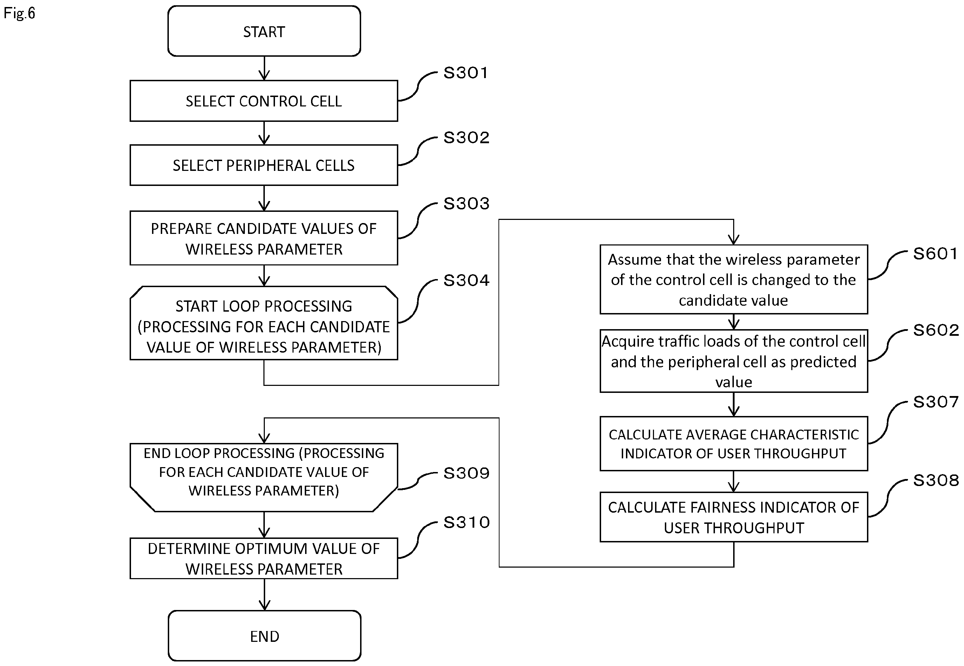

Figure 6 is a flowchart illustrating the operation of wireless parameter control device 500. Note that, in Figure 6, the same sign is attached to processing that is similar to that in Figure 3 and description is omitted.

First, wireless parameter controller 204 selects one of the prepared candidate values of the wireless parameter, and assumes that the wireless parameter of the control cell is changed to the candidate value (step S601).

Note that "assuming that the wireless parameter is changed" means virtually changing the wireless parameter only in analysis processing or in computer program processing without actually changing the wireless parameter of the wireless cell.

Next, traffic load predictor 501 predicts the traffic load of the control cell and the peripheral cell in the case of assuming that the wireless parameter of the control cell is changed to the selected candidate value.

Traffic load acquirer 502 acquires predicted load information indicating the traffic load (predicted traffic load) that is predicted from traffic load predictor 501 (step S602).

Here, a method of predicting the traffic load by traffic load predictor 501 will be described in detail. In the following description, it is assumed that the wireless parameter that is assumed to be changed is the transmission power.

Note that, below, the traffic load (present traffic load) of wireless cell k at present is indicated as Uk, and the number of wireless terminals (the present number of wireless terminals) that are connected to wireless cell k is indicated as Nk. Also, the traffic load (the predicted traffic load) of wireless cell k in the case of assuming that the wireless parameter is changed, which is predicted by traffic load predictor 501, is indicated as Uk', and the number of wireless terminals (the predicted number of wireless terminals) that are connected to wireless cell k is indicated as Nk'.

At this time, the traffic load Uk' of wireless cell k in the case of assuming that the wireless parameter of the control cell is changed can be predicted as Uk' = Uk × (Nk'/Nk).

That is, assuming that the number of wireless terminals connected to wireless cell k and the traffic load of wireless cell k are proportional, the traffic load can be predicted from the change rate of the number of wireless terminals.

Here, the number Nk' of wireless terminals connected to wireless cell k in the case of assuming that the wireless parameter of the control cell is changed can be predicted by acquiring the reception power of each wireless cell measured by each wireless terminal beforehand. Below, the reception power of each wireless cell that is measured by wireless terminal T is indicated as (P0, P1, P2, ..., Pn) (Pi: reception power [dBm] of wireless cell i).

For example, in the case of assuming that the transmission power of wireless cell 0 is changed from 46 dBm to 40 dBm, the reception power of wireless terminal T is predicted to be (P0 + (40 - 46), P1, P2, ..., Pn). That is, the reception power in the case of assuming that the transmission power of the wireless cell is changed is predicted using the characteristics in which "a change amount (dB) of the transmission power of the wireless cell" and "a change amount (dB) of the reception power of the wireless cell in the wireless terminal" are equal. Then, based the predicted reception power of each wireless cell, the wireless cell whose reception power becomes the largest is predicted as the new serving cell for wireless terminal T. In this way, the number Nk' of wireless terminals connected to wireless cell k in the case of assuming that the wireless parameter of the control cell is changed can be predicted.

Note that, using the number of wireless terminals that predict the traffic load is just an example, and it is not limited thereto. As a modification, instead of the number of wireless terminals, traffic load predictor 501 may use, a radio wave propagation simulator utilizing a ray tracing method or the like, for example, to predict the traffic load.

Traffic load predictor 501 estimates, for example, an area (Sk) of wireless cell k at present and an area (Sk') of wireless cell k in the case of assuming that the wireless parameter of the control cell is changed by the radio wave propagation simulator. Then, the traffic load Uk' of wireless cell k in the case of assuming that the wireless parameter of the control cell is changed is predicted as Uk' = Uk × (Sk'/Sk).

Note that, even when the wireless parameter that is assumed to be changed is the antenna tilt angle or the antenna azimuth angle of the wireless cell, traffic load predictor 501 similarly predicts the traffic loads of the control cell and the peripheral cell in the case of assuming that the wireless parameter is changed.

In this way, wireless parameter control device 500 of this exemplary embodiment includes traffic load predictor 501 that predicts the traffic load after the wireless parameter of the control cell is changed, traffic load acquirer 502 that acquires the traffic load, average characteristic indicator calculator 202 that calculates the average characteristic indicator of user throughput, and fairness indicator calculator 203 that calculates the fairness indicator of the user throughput. Since the average characteristic indicator and the fairness indicator of the user throughput are calculated using the traffic loads of the control cell and the peripheral cell predicted by traffic load predictor 501, the need to measure the traffic load of each wireless cell every time the wireless parameter of the control cell is changed is eliminated, and processing time in wireless parameter control device 500 can be shortened.

### (Third exemplary embodiment)

Next, the third exemplary embodiment will be described with reference to the drawings.

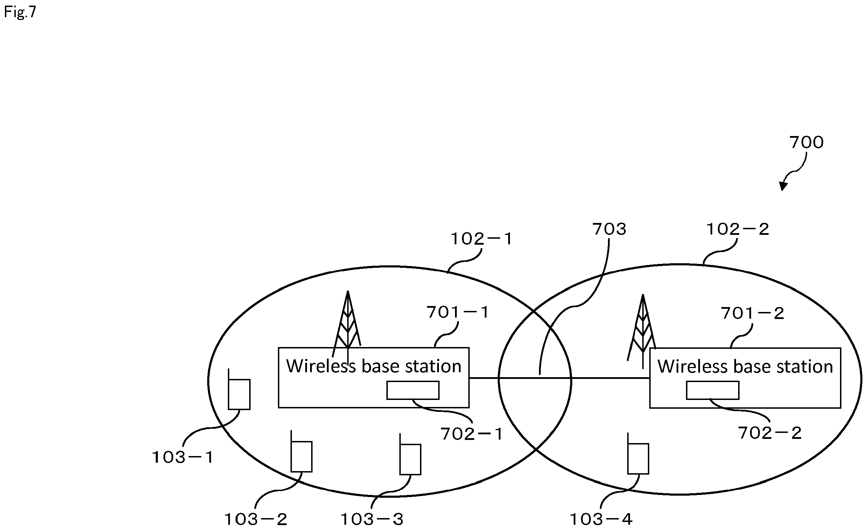

Figure 7 is a schematic configuration diagram of wireless communication network 700 of the third exemplary embodiment.

Wireless communication network 700 in the third exemplary embodiment is different, compared with wireless communication network 100 in the first exemplary embodiment, as regards the point that wireless parameter control device 104 is eliminated and the point that wireless base stations 101 (101-1 and 101-2) are changed to wireless base stations 701 (701-1 and 701-2).

Wireless base stations 701-1 and 701-2 are connected by wireless or wired communication line 703. Note that wireless base stations 701-1 and 701-2 do not need to be directly connected by communication line 703, and may be indirectly connected through a host network (not shown in the figure), for example.

Wireless base stations 701-1 and 701-2 can notify the other wireless base station of part or all of the load information of wireless cells 102-1 and 102-2 that are managed by each of them. Also, wireless base stations 701-1 and 701-2 can notify the other wireless base station of the determined wireless parameter and instruct the other wireless base station to change the wireless parameter, or the like.

In addition, wireless base stations 701-1 and 701-2 include wireless parameter control blocks 702-1 and 702-2 that control the wireless parameter of the wireless cell, respectively.

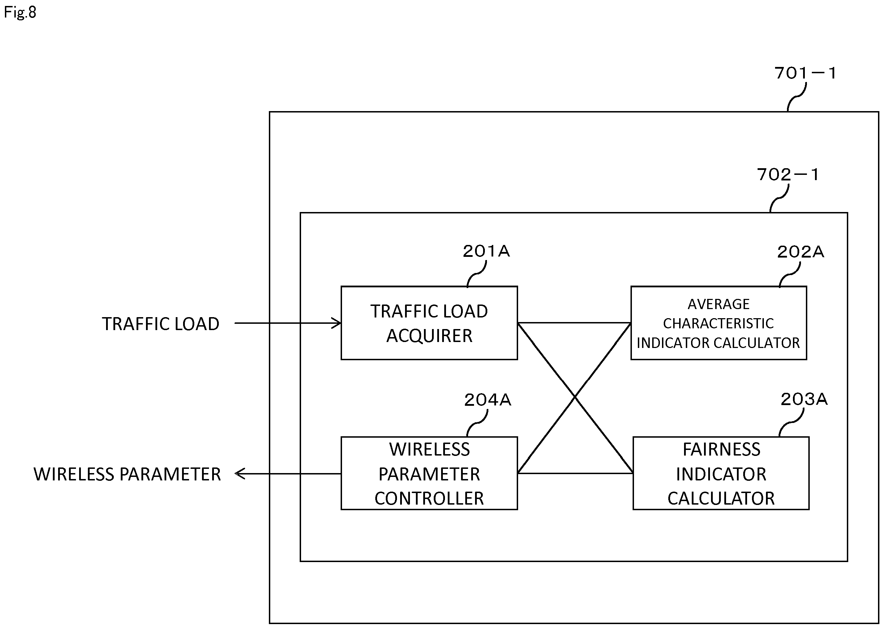

Figure 8 is a block diagram illustrating a configuration of wireless base station 701-1 in more detail.

Wireless base station 701-1 includes wireless parameter control block 702-1.

Wireless parameter control block 702-1 includes traffic load acquirer 201A, average characteristic indicator calculator 202A, fairness indicator calculator 203A, and wireless parameter controller 204A.

Since traffic load acquirer 201A, average characteristic indicator calculator 202A, fairness indicator calculator 203A, and wireless parameter controller 204A respectively correspond to traffic load acquirer 201, average characteristic indicator calculator 202, fairness indicator calculator 203, and wireless parameter controller 204 in the first exemplary embodiment and perform similar processing, description is omitted.

Also, since wireless base station 701-2 is in the configuration that is similar to that of wireless base station 701-1, description is omitted.

In this way, in wireless communication network 700 of this exemplary embodiment, wireless base stations 701 include wireless parameter control blocks 702 that control the wireless parameter of the wireless cell. Therefore, since individual wireless base stations 701 can control the wireless parameter in an autonomously distributed manner, the need for a wireless parameter control device to intensively control the wireless parameter of each wireless cell is eliminated, and the configuration of the wireless communication network can be simplified.

The method performed in the wireless parameter control device relating to the present invention may be applied to a program that is to be executed by a computer. In addition, it is also possible to store the program in a storage medium and it is also possible to provide it to the outside through a network.

The present claimed invention is described above with reference to the exemplary embodiments, however, the present invention is not limited to the exemplary embodiments described above. Various modifications that can be understood by those skilled in the art can be applied to the configuration and details within the scope of the appended claims.

This application claims priority based on Japanese Patent Application No. 2013-255033 applied on December 10, 2013.

## Claims

1. A wireless parameter control device (104) comprising:
a traffic load acquirer (201) arranged to acquire, from a first wireless base station (101-1) that manages a first wireless cell (102-1), a traffic load of the first wireless cell (102-1), and that acquires, from a second wireless base station (101-2) that manages a second wireless cell (102-2), a traffic load of the second wireless cell (102-2) located around the first wireless cell (102-1);
an average characteristic indicator calculator (202) for calculating a sum or a product of the traffic load of the first wireless cell (102-1) and the traffic load of the second wireless cell (102-2), as a first indicator that indicates an average characteristic of user throughputs for wireless terminals (103) in the first wireless cell (102-1) and the second wireless cell (102-2);
a fairness indicator calculator (203) for calculating a bias between the traffic load of the first wireless cell (102-1) and the traffic load of the second wireless cell (102-2), by using at least one from among an absolute value of difference, a ratio, a standard deviation, and variance between the traffic load of the first wireless cell (102-1) and the traffic load of the second wireless cell (102-2), as a second indicator that indicates fairness of the user throughputs for wireless terminals (103) in the first wireless cell (102-1) and the second wireless cell (102-2); and
a wireless parameter controller (204) for determining a value of at least one of a cell unit wireless parameter and a cell pair unit wireless parameter, using a value of a third indicator calculated using an objective function that evaluates a throughput characteristic of wireless terminals (103) in the first wireless cell (102-1) and the second wireless cell (102-2), on the basis of the first indicator and the second indicator, and for controlling said one from among the cell unit wireless parameter and the cell pair unit wireless parameter of the first wireless cell (102-1) using said determined value, wherein the cell pair unit wireless parameter is a parameter that directly affects the cell pair of the first and second wireless cell and does not directly affect the others.

2. The wireless parameter control device (104) according to claim 1,
wherein there are the plurality of second wireless cells (102-2), and
said average characteristic indicator calculator (202) and said fairness indicator calculator (203) are configured to calculate the first indicator and the second indicator, respectively, using a statistic of traffic loads of the plurality of second wireless cells (102-2).

3. The wireless parameter control device (104) according to claim 2,
wherein said wireless parameter controller (204) is configured to control a cell unit wireless parameter affecting all of the second wireless cells (102-2).

4. The wireless parameter control device (104) according to claim 1,
wherein there are the plurality of second wireless cells (102-2),
said average characteristic indicator calculator (202) and said fairness indicator calculator (203) are configured to calculate the first indicator and the second indicator, respectively, for each second wireless cell (102-2), and
said wireless parameter controller (204) is configured to control a cell pair unit wireless parameter affecting the second wireless cell (102-2), using said determined value, for each second wireless cell (102-2).

5. The wireless parameter control device (104) according to any one of claims 1 to 4, further comprising:
a traffic load predictor (501) for predicting the traffic load of the first wireless cell (102-1) and the traffic load of the second wireless cell (102-2) after virtually changing at least one from among the cell unit wireless parameter and the cell pair unit wireless parameter of the first wireless cell (102-1), and for obtaining first predicted load information that indicates the predicted traffic load of the first wireless cell (102-1) and second predicted load information that indicates the predicated traffic load of the second wireless cell (102-2),
wherein said traffic load acquirer (201) is configured to acquire the first predicted load information and the second predicted load information, and
said average characteristic indicator calculator (202) and said fairness indicator calculator (203) are configured to calculate the first indicator and the second indicator, respectively, using the first predicted load information and the second predicted load information.

6. A wireless base station (101-1) comprising the wireless parameter control device (104) according to any one of claims 1 to 5.

7. A wireless parameter control method, the method comprising:
acquiring (S306), from a first wireless base station (101-1) that manages a first wireless cell (102-1), a traffic load of the first wireless cell (102-1), and acquiring, from a second wireless base station (101-2) that manages a second wireless cell (102-2), a traffic load of the second wireless cell (102-2) located around the first wireless cell (102-1);
calculating (S307) a sum or a product of the traffic load of the first wireless cell (102-1) and the traffic load of the second wireless cell (102-2), as a first indicator that indicates an average characteristic of user throughputs for wireless terminals (103) in the first wireless cell (102-1) and the second wireless cell (102-2);
calculating (S308) a bias between the traffic load of the first wireless cell (102-1) and the traffic load of the second wireless cell (102-2), by using at least one from among an absolute value of difference, a ratio, a standard deviation, and variance between the traffic load of the first wireless cell (102-1) and the traffic load of the second wireless cell (102-2), as a second indicator that indicates fairness of the user throughputs for wireless terminals (103) in the first wireless cell (102-1) and the second wireless cell (102-2);
determining (S310) a value of at least one of a cell unit wireless parameter and a cell pair unit wireless parameter, using a value of a third indicator calculated using an objective function that evaluates a throughput characteristic of wireless terminals (103) in the first wireless cell (102-1) and the second wireless cell (102-2), on the basis of the first indicator and the second indicator; and
controlling said one from among the cell unit wireless parameter and the cell pair unit wireless parameter of the first wireless cell (102-1) using said determined value, wherein the cell pair unit wireless parameter is a parameter that directly affects the cell pair of the first and second wireless cell and does not directly affect the others.

8. A computer program product comprising instructions, that when executed by a wireless parameter control device, cause said device to perform the method of claim 7.

## Patentansprüche

1. Funkparametersteuervorrichtung (104), mit:
einer Verkehrslasterfassungseinrichtung (201), die dazu eingerichtet ist, von einer ersten Funk-Basisstation (101-1), die eine erste Funkzelle (102-1) managt, eine Verkehrslast der ersten Funkzelle (102-1) zu erfassen, und von einer zweiten Funk-Basisstation (101-2), die eine zweite Funkzelle (102-2) managt, eine Verkehrslast der zweiten Funkzelle (102-2) zu erfassen, die sich in der Nähe der ersten Funkzelle (102-1) befindet;
einer Einrichtung (202) zum Berechnen eines Indikators einer durchschnittlichen Charakteristik zum Berechnen einer Summe oder eines Produkts aus der Verkehrslast der ersten Funkzelle (102-1) und der Verkehrslast der zweiten Funkzelle (102-2) als einen ersten Indikator, der eine durchschnittliche Charakteristik von Benutzerdurchsätzen für drahtlose Endgeräte (103) in der ersten Funkzelle (102-1) und in der zweiten Funkzelle (102-2) anzeigt;
einer Einrichtung (203) zum Berechnen eines Fairness-Indikators zum Berechnen einer Verzerrung zwischen der Verkehrslast der ersten Funkzelle (102-1) und der Verkehrslast der zweiten Funkzelle (102-2) unter Verwendung mindestens eines Wertes unter einem Absolutwert einer Differenz, einem Verhältnis, einer Standardabweichung und einer Varianz zwischen der Verkehrslast der ersten Funkzelle (102-1) und der Verkehrslast der zweiten Funkzelle (102-2) als einen zweiten Indikator, der eine Fairness der Benutzerdurchsätze für drahtlose Endgeräte (103) in der ersten Funkzelle (102-1) und in der zweiten Funkzelle (102-2) anzeigt; und
einer Funkparametersteuereinrichtung (204) zum Bestimmen eines Wertes mindestens eines Parameters unter einem Zelleneinheit-Funkparameter und einem Zellenpaareinheit-Funkparameter unter Verwendung eines Wertes eines dritten Indikators, der unter Verwendung einer Zielfunktion berechnet wird, die eine Durchsatzcharakteristik von drahtlosen Endgeräten (103) in der ersten Funkzelle (102-1) und in der zweiten Funkzelle bewertet, basierend auf dem ersten Indikator und dem zweiten Indikator, und zum Steuern des einen Parameters unter dem Zelleneinheit-Funkparameter und dem Zellenpaareinheit-Funkparameter der ersten Funkzelle (102-1) unter Verwendung des bestimmten Wertes, wobei der Zellenpaareinheit-Funkparameter ein Parameter ist, der das Zellenpaar der ersten und der zweiten Funkzelle direkt beeinflusst und die anderen nicht direkt beeinflusst.

2. Funkparametersteuervorrichtung (104) nach Anspruch 1 , wobei
eine Vielzahl zweiter Funkzellen (102-2) vorhanden ist, und
die Einrichtung (202) zum Berechnen eines Indikators einer durchschnittlichen Charakteristik und die Einrichtung (203) zum Berechnen eines Fairness-Indikators dafür konfiguriert sind, den ersten Indikator und den zweiten Indikator unter Verwendung einer Statistik von Verkehrslasten der Vielzahl zweiter Funkzellen (102-2) zu berechnen.

3. Funkparametersteuervorrichtung (104) nach Anspruch 2, wobei
die Funkparametersteuereinrichtung (204) dafür konfiguriert ist, einen Funkparameter der Zelleneinheit zu steuern, der alle zweiten Funkzellen (102-2) beeinflusst.

4. Funkparametersteuervorrichtung (104) nach Anspruch 1,
wobei eine Vielzahl zweiter Funkzellen (102-2) vorhanden ist,
wobei die Einrichtung (202) zum Berechnen eines Indikators einer durchschnittlichen Charakteristik und die Einrichtung (203) zum Berechnen eines Fairness-Indikators dafür konfiguriert sind, den ersten Indikator und den zweiten Indikator für jede zweite Funkzelle (102-2) zu berechnen, und
die Funkparametersteuereinrichtung (204) dafür konfiguriert ist, einen Zellenpaareinheit-Funkparameter, der die zweite Funkzelle (102-2) beeinflusst, unter Verwendung des bestimmten Wertes für jede zweite Funkzelle (102-2) zu steuern.

5. Funkparametersteuervorrichtung (104) nach einem der Ansprüche 1 bis 4, ferner mit:
einer Verkehrslastvorhersageeinrichtung (501) zum Vorhersagen der Verkehrslast der ersten Funkzelle (102-1) und der Verkehrslast der zweiten Funkzelle (102-2) nach virtuellem Ändern mindestens eines Parameters unter dem Zelleneinheit-Funkparameter und dem Zellenpaareinheit-Funkparameter der ersten Funkzelle (102-1), und zum Erhalten einer ersten vorhergesagten Lastinformation, die die vorhergesagte Verkehrslast der ersten Funkzelle (102-1) anzeigt, und einer zweiten vorhergesagten Lastinformation, die die vorhergesagte Verkehrslast der zweiten Funkzelle (102-2) anzeigt,
wobei die Verkehrslasterfassungseinrichtung (201) dafür konfiguriert ist, die erste vorhergesagte Lastinformation und die zweite vorhergesagte Lastinformation zu erfassen, und
die Einrichtung (202) zum Berechnen eines Indikators einer durchschnittlichen Charakteristik und die Einrichtung (203) zum Berechnen eines Fairnessindikators dafür konfiguriert sind, den ersten Indikator und den zweiten Indikator unter Verwendung der ersten vorhergesagten Lastinformation und der zweiten vorhergesagten Lastinformation zu berechnen.

6. Funk-Basisstation (101-1) mit der Funkparametersteuervorrichtung (104) nach einem der Ansprüche 1 bis 5.

7. Funkparametersteuerverfahren, wobei das Verfahren die Schritte aufweist:
Erfassen (S306) einer Verkehrslast einer ersten Funkzelle (102-1) von einer ersten Funk-Basisstation (101-1), die die erste Funkzelle (102-1) managt, und Erfassen einer Verkehrslast einer zweiten Funkzelle (102-2), die sich in der Nähe der ersten Funkzelle (102-1) befindet, von einer zweiten Funk-Basisstation (101-2), die die zweite Funkzelle (102-2) managt;
Berechnen (S307) einer Summe oder eines Produkts aus der Verkehrslast der ersten Funkzelle (102-1) und der Verkehrslast der zweiten Funkzelle (102-2) als einen ersten Indikator, der eine durchschnittliche Charakteristik von Benutzerdurchsätzen für drahtlose Endgeräte (103) in der ersten Funkzelle (102-1) und in der zweiten Funkzelle (102-2) anzeigt;
Berechnen (S308) einer Verzerrung zwischen der Verkehrslast der ersten Funkzelle (102-1) und der Verkehrslast der zweiten Funkzelle (102-2) unter Verwendung mindestens eines Wertes unter einem Absolutwert einer Differenz, einem Verhältnis, einer Standardabweichung und einer Varianz zwischen der Verkehrslast der ersten Funkzelle (102-1) und der Verkehrslast der zweiten Funkzelle (102-2) als einen zweiten Indikator, der eine Fairness der Benutzerdurchsätze für drahtlose Endgeräte (103) in der ersten Funkzelle(102-1) und in der zweiten Funkzelle (102-2) anzeigt;
Bestimmen (S310) eines Wertes mindestens eines Parameters unter einem Zelleneinheit-Funkparameter und einem Zellenpaareinheit-Funkparameter unter Verwendung eines Wertes eines dritten Indikators, der unter Verwendung einer Zielfunktion berechnet wird, die eine Durchsatzcharakteristik von drahtlosen Endgeräten (103) in der ersten Funkzelle (102-1) und in der zweiten Funkzelle (102-2) bewertet, basierend auf dem ersten Indikator und dem zweiten Indikator; und
Steuern des einen Parameters unter dem Zelleneinheit-Funkparameter und dem Zellenpaareinheit-Funkparameter der ersten Funkzelle (102-1) unter Verwendung des bestimmten Wertes, wobei der Zellenpaareinheit-Funkparameter ein Parameter ist, der das Zellenpaar der ersten und der zweiten Funkzelle direkt beeinflusstunddie anderen nicht direkt beeinflusst.

8. Computerprogrammprodukt, das Anweisungen enthält, die, wenn sie durch eine Funkparametersteuervorrichtung ausgeführt werden, die Vorrichtung veranlassen, das Verfahren nach Anspruch 7 auszuführen.

## Revendications

1. Dispositif de commande de paramètres sans fil (104) comprenant :
un dispositif d'acquisition de charge de trafic (201) agencé pour acquérir, à partir d'une première station de base sans fil (101-1) qui gère une première cellule sans fil (102-1), une charge de trafic de la première cellule sans fil (102-1), et qui acquiert, à partir d'une deuxième station de base sans fil (101-2) qui gère une deuxième cellule sans fil (102-2), une charge de trafic de la deuxième cellule sans fil (102-2) située autour de la première cellule sans fil (102-1) ;
un calculateur d'indicateur de caractéristique moyenne (202) pour calculer une somme ou un produit de la charge de trafic de la première cellule sans fil (102-1) et la charge de trafic de la deuxième cellule sans fil (102-2), en tant que premier indicateur qui indique une caractéristique moyenne de débits d'utilisateur pour des terminaux sans fil (103) dans la première cellule sans fil (102-1) et la deuxième cellule sans fil (102-2) ;
un calculateur d'indicateur d'équité (203) pour calculer un biais entre la charge de trafic de la première cellule sans fil (102-1) et la charge de trafic de la deuxième cellule sans fil (102-2), en utilisant au moins l'un parmi une valeur absolue de différence, un rapport, un écart type, et une variance entre la charge de trafic de la première cellule sans fil (102-1) et la charge de trafic de la deuxième cellule sans fil (102-2), en tant que deuxième indicateur qui indique l'équité des débits d'utilisateur pour des terminaux sans fil (103) dans la première cellule sans fil (102-1) et la deuxième cellule sans fil (102-2) ; et
une unité de commande de paramètre sans fil (204) pour déterminer une valeur d'au moins l'un parmi un paramètre sans fil d'unité de cellule et un paramètre sans fil d'unité de paire de cellules, en utilisant une valeur d'un troisième indicateur calculé en utilisant une fonction objective qui évalue une caractéristique de débit de terminaux sans fil (103) dans la première cellule sans fil (102-1) et la deuxième cellule sans fil (102-2), sur la base du premier indicateur et du deuxième indicateur, et pour commander ledit un parmi le paramètre sans fil d'unité de cellule et le paramètre sans fil d'unité de paire de cellules de la première cellule sans fil (102-1) en utilisant ladite valeur déterminée, dans lequel le paramètre sans fil d'unité de paire de cellules est un paramètre qui affecte directement la paire de cellules de la première et de la deuxième cellule sans fil et qui n'affecte pas directement les autres.

2. Dispositif de commande de paramètres sans fil (104) selon la revendication 1,
dans lequel il existe une pluralité de deuxièmes cellules sans fil (102-2), et
ledit calculateur d'indicateur de caractéristique moyenne (202) et ledit calculateur d'indicateur d'équité (203) sont configurés pour calculer le premier indicateur et le deuxième indicateur, respectivement, en utilisant une statistique des charges de trafic de la pluralité de deuxièmes cellules sans fil (102-2).

3. Dispositif de commande de paramètres sans fil (104) selon la revendication 2,
dans lequel ladite unité de commande de paramètre sans fil (204) est configurée pour commander un paramètre sans fil d'unité de cellule affectant toutes les deuxièmes cellules sans fil (102-2).

4. Dispositif de commande de paramètres sans fil (104) selon la revendication 1,
dans lequel il existe une pluralité de deuxièmes cellules sans fil (102-2),
ledit calculateur d'indicateur de caractéristique moyenne (202) et ledit calculateur d'indicateur d'équité (203) sont configurés pour calculer le premier indicateur et le deuxième indicateur, respectivement, pour chaque deuxième cellule sans fil (102-2), et
ladite unité de commande de paramètre sans fil (204) est configurée pour commander un paramètre sans fil d'unité de paire de cellules affectant la deuxième cellule sans fil (102-2), en utilisant ladite valeur déterminée, pour chaque deuxième cellule sans fil (102-2) .

5. Dispositif de commande de paramètres sans fil (104) selon l'une quelconque des revendications 1 à 4, comprenant en outre :
un prédicteur de charge de trafic (501) pour prédire la charge de trafic de la première cellule sans fil (102-1) et la charge de trafic de la deuxième cellule sans fil (102-2) après avoir changé virtuellement au moins l'un parmi le paramètre sans fil d'unité de cellule et le paramètre sans fil d'unité de paire de cellules de la première cellule sans fil (102-1), et pour obtenir des premières informations de charge prédite qui indiquent la charge de trafic prédite de la première cellule sans fil (102-1) et des deuxièmes informations de charge prédite qui indiquent la charge de trafic prédite de la deuxième cellule sans fil (102-2),
dans lequel ledit dispositif d'acquisition de charge de trafic (201) est configuré pour acquérir les premières informations de charge prédite et les deuxièmes informations de charge prédite, et
ledit calculateur d'indicateur de caractéristique moyenne (202) et ledit calculateur d'indicateur d'équité (203) sont configurés pour calculer le premier indicateur et le deuxième indicateur, respectivement, en utilisant les premières informations de charge prédites et les deuxièmes informations de charge prédites.

6. Station de base sans fil (101-1) comprenant le dispositif de commande de paramètres sans fil (104) selon l'une quelconque des revendications 1 à 5.

7. Procédé de commande de paramètres sans fil, le procédé comprenant :
acquérir (S306), à partir d'une première station de base sans fil (101-1) qui gère une première cellule sans fil (102-1), une charge de trafic de la première cellule sans fil (102-1), et acquérir, à partir d'une deuxième station de base sans fil (101-2) qui gère une deuxième cellule sans fil (102-2), une charge de trafic de la deuxième cellule sans fil (102-2) située autour de la première cellule sans fil (102-1) ;
calculer (S307) une somme ou un produit de la charge de trafic de la première cellule sans fil (102-1) et de la charge de trafic de la deuxième cellule sans fil (102-2), en tant que premier indicateur qui indique une caractéristique moyenne de débits d'utilisateur pour des terminaux sans fil (103) dans la première cellule sans fil (102-1) et la deuxième cellule sans fil (102-2) ;
calculer (S308) un biais entre la charge de trafic de la première cellule sans fil (102-1) et la charge de trafic de la deuxième cellule sans fil (102-2), en utilisant au moins l'un parmi une valeur absolue de différence, un rapport, un écart type, et une variance entre la charge de trafic de la première cellule sans fil (102-1) et la charge de trafic de la deuxième cellule sans fil (102-2), en tant que deuxième indicateur qui indique l'équité des débits d'utilisateur pour des terminaux sans fil (103) dans la première cellule sans fil (102-1) et la deuxième cellule sans fil (102-2) ;
déterminer (S310) une valeur d'au moins l'un parmi un paramètre sans fil d'unité de cellule et un paramètre sans fil d'unité de paire de cellules, en utilisant une valeur d'un troisième indicateur calculé en utilisant une fonction objective qui évalue une caractéristique de débit de terminaux sans fil (103) dans la première cellule sans fil (102-1) et la deuxième cellule sans fil (102-2), sur la base du premier indicateur et du deuxième indicateur ; et
commander ledit un parmi le paramètre sans fil d'unité de cellule et le paramètre sans fil d'unité de paire de cellules de la première cellule sans fil (102-1) en utilisant ladite valeur déterminée, dans lequel le paramètre sans fil d'unité de paire de cellules est un paramètre qui affecte directement la paire de cellules de la première et de la deuxième cellule sans fil et qui n'affecte pas directement les autres.

8. Produit de programme informatique comprenant des instructions qui, lorsqu'elles sont exécutées par un dispositif de commande de paramètres sans fil, amènent ledit dispositif à réaliser le procédé de la revendication 7.
